# EUROPEAN PATENT SPECIFICATION

(11) **EP 2 634 831 B1**
(45) Date of publication and mention of the grant of the patent: **29.11.2017**
(21) Application number: 13157182.0
(22) Date of filing: 28.02.2013
(51) Int. Cl.: H01M 2/02

(54) **Pouch type secondary battery**
Beutelartige Sekundärbatterie
Batterie secondaire à emballage de type poche

(30) Priority: 02.03.2012 US 201261606084 P; 20.02.2013 US 201313772151
(43) Date of publication of application: 04.09.2013
(73) Proprietor: Samsung SDI Co., Ltd., Yongin-si, Gyeonggi-do (KR)
(72) Inventor: Pak, Ki-Sik, Gyeonggi-do (KR); Hong, Ki-Sung, Gyeonggi-do (KR)
(74) Representative: Walaski, Jan Filip

(56) References cited:
- JP-A- 2001 250 586
- JP-A- 2008 041 494
- US-A1- 2005 142 439

## Description

The present invention relates to a secondary battery, and more particularly, to a pouch-type secondary battery having improved safety.

Recently, secondary batteries have been variously used as power sources of portable electronic devices. As portable electronic devices are used in various fields, a demand on secondary batteries rapidly increases. The secondary battery is rechargeable and thus can be used plural times. Therefore, the secondary battery is economically and environmentally effective, and thus the use of the secondary battery is promoted.

On the other hand, a material such as lithium having high reactivity is included in the inside of the secondary battery, and therefore, the safety of the secondary battery may be problematic in the handling of the secondary battery. Accordingly, various studies have been conducted to improve the safety of the secondary battery.

US2005/142439 relates to a pouch-type battery comprising an insulating tape.

Embodiments provide a secondary battery having improved safety by employing a new member.

Embodiments also provide a secondary battery having improved productivity by simplifying a manufacturing process and decreasing a failure rate.

According to an aspect of the present invention, there is provided a pouch-type secondary battery according to claim 1. The pouch-type secondary battery comprises an electrode assembly, a pouch having an accommodating portion for accommodating the electrode assembly and a sealing portion provided along an edge of the accommodating portion and an insulating member around the sealing portion, wherein the sealing portion is folded against the accommodating portion and a bonding member is arranged between the accommodating portion and the sealing portion, wherein the insulating member and the bonding member are integrally provided.

The insulating member may be folded around an edge of the sealing portion.

The insulating member may comprise a first wing extending along a first surface of the sealing portion closest to the accommodating portion and a second wing extending along a second surface of the sealing portion opposite the first surface.

The secondary battery may further comprise a joining portion joining the first and second wings and extending along the edge of the sealing portion.

The first and second wings of the insulating member may be symmetrically disposed around the edge of the sealing portion.

The insulating member may cover substantially the whole of the first and second surfaces of the sealing portion.

The first wing of the insulating member may be wider than the second wing. The first wing may cover substantially the whole of the first surface of the sealing portion.

The insulating member may further comprise a third wing that is arranged to fold onto a top surface of the accommodating portion. The third wing may extend from the joining portion in an opposite direction to the first and second wings.

The pouch may comprise a main body and a cover for covering the accommodating portion, the main body comprising a flange at the top of the accommodating portion, wherein an edge of the cover is bonded to the flange to form the sealing portion.

The bonding member may be arranged between the first wing and the accommodating portion.

The bonding member may correspond to a side of the first wing.

As described above, according to the present invention, it is possible to provide a secondary battery having improved safety by employing a new member.

Further, it is possible to provide a secondary battery having improved productivity by simplifying a manufacturing process and decreasing a failure rate.

The accompanying drawings, together with the specification, illustrate exemplary embodiments of the present invention, and, together with the description, serve to explain the principles of the present invention.
FIG. 1 is a perspective view of a pouch-type secondary battery not forming part of the present invention.
FIG. 2 is an exploded perspective view of FIG. 1.
FIG. 3 is a perspective view of a battery case and an electrode assembly not forming part of the present invention.
FIG. 4A is an exploded perspective view of an insulating member not forming part of the present invention.
FIG. 4B is a perspective view of the insulating member not forming part of the present invention.
FIG. 5 is an extended view of part X of FIG. 1.
FIG. 6A is an exploded perspective view of an insulating member not forming part of the present invention.
FIG. 6B is a plan view of a pouch-type secondary battery not forming part of the present invention.
FIG. 7A is an exploded perspective view of an insulating member according to an embodiment of the present invention.
FIG. 7B is a plan view of a pouch-type secondary battery according to the embodiment of the present invention.

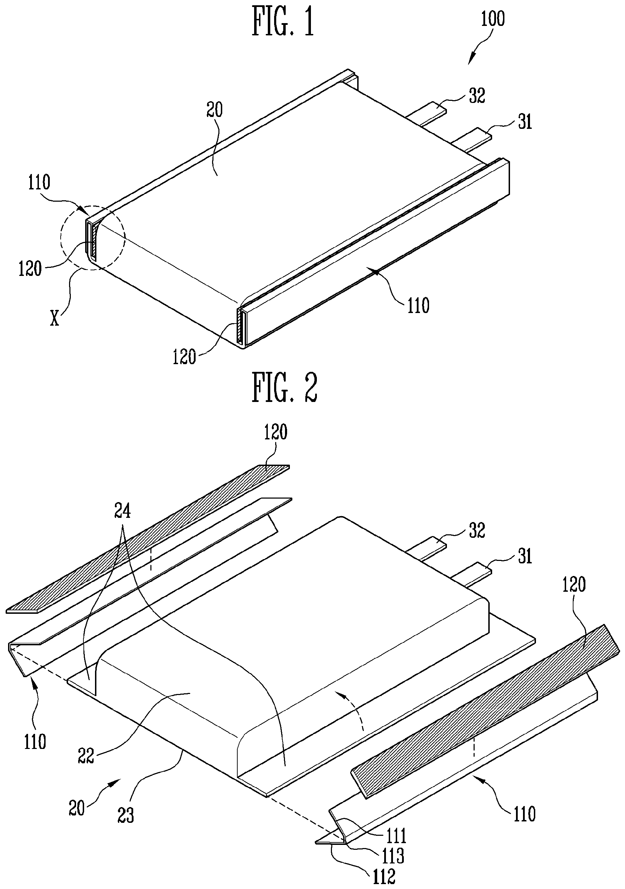

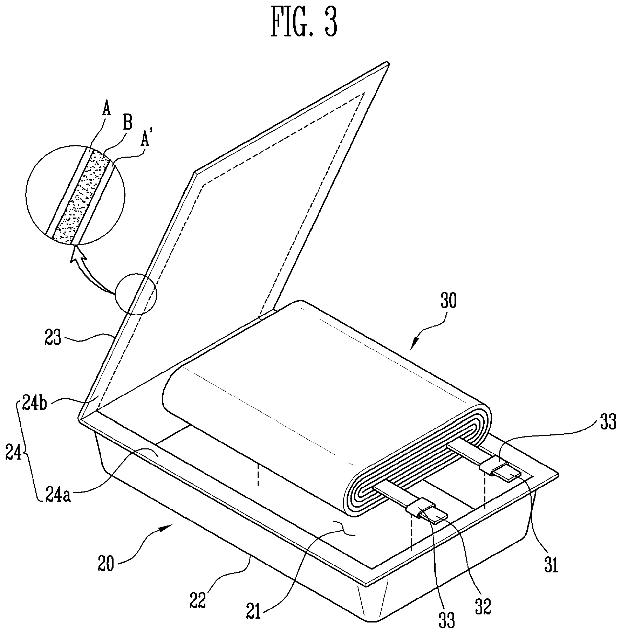

Referring to Figures 1 to 3, not forming part of the present invention, the pouch-type secondary battery 100 according to this example includes an electrode assembly 30 having first and second electrode plates and a separator interposed between the electrode plates, a battery case, or pouch, 20 having an accommodating portion 21 for accommodating the electrode assembly 30 and a sealing portion 24 provided along an edge of the accommodating portion 21 and an insulating member 110 provided to surround at least one part of the sealing portion 24. The insulating member 110 has a bonding portion, or member, 120 provided thereon. The sealing portion 24 is bent toward the accommodating portion 21, and the bonding portion 120 is interposed between the insulating member 110 and the accommodating portion 21 of the battery case 21. The insulating member 110 and the bonding portion 120 are integrally provided.

The pouch-type secondary battery 100 includes the electrode assembly 30 and the battery case 20, and the battery case 20 accommodates the electrode assembly 30 and an electrolyte in the accommodating portion 21 provided to the inside thereof. The electrode assembly 30 includes first and second electrode tabs 31 and 32 respectively connected to the first and second electrode plates, and the first and second electrode tabs 31 and 32 may be extracted outward from the electrode assembly 30. For example, the first and second electrode plates may be positive and negative electrode plates, respectively. The first electrode tab 31 may be provided to the positive electrode plate so as to act as a positive electrode tab, and the second electrode tab 32 may be provided to the negative electrode plate so as to act as a negative electrode tab.

Electrochemical energy is generated when ions or electrons move between the first and second electrode plates. The electrochemical energy may be provided to the outside of the electrode assembly 30 through the first and second electrode tabs 31 and 32. Lead films 33 may be provided to the first and second electrode tabs 31 and 32, respectively. The electrode assembly 30 may be manufactured using various methods including a method of winding or laminating the first and second electrode plates and the separator together, and the like.

The battery case 20 may include a main body having the accommodating portion 21 provided thereto and a cover 23 connected to the main body 22 so as to cover the accommodating portion 21. The pouch-type secondary battery 100 may be manufactured by accommodating the electrode assembly 30 and the electrolyte in the accommodating portion 21 of the main body 22 and then thermally bonding edges 24a and 24b of the main body 22 and the cover 23 in the state in which the main body 22 and the cover 23 are adhered closely to each other. The accommodating portion 21 may be provided to correspond to the shape of the electrode assembly 30. The accommodating portion 21 may be provided to the main body 22 through deep drawing in which a hollow container with no joint is made using a flat plate.

The battery case 20 may be formed with a plurality of layers including an internal resin layer A', a metal layer B and an external resin layer A. Here, the internal resin layer A', the metal layer B and the external resin layer A may be provided to be sequentially laminated. The internal resin layer A' is a part that directly faces the electrode assembly 30, and the external resin layer A may be provided to the outermost surface of the secondary battery 20. The internal and external resin layers A' and A are used to prevent an electrical short circuit, or the like, and may be formed using polymer resin, or the like, which is a non-conductor. On the other hand, the metal layer B is provided between the internal and external resin layers A' and A, so as to provide a predetermined mechanical strength to the battery case. For example, the metal layer B may include aluminum or the like.

When the first and second electrode tabs 31 and 32 are extracted to the outside of the battery case 20, the first and second electrode tabs 31 and 32 may prevent the sealing portion 24 from being thermally bonded. Thus, the lead film 33 is settled on the sealing portion 24 of the battery case 20, so that it is possible to prevent the sealing performance of the sealing portion 24 from being lowered.

For example, the first electrode tab 31 may include aluminum and the second electrode tab 32 may include nickel. While the first electrode tab 31 may have the same polarity as the metal layer B of the battery case 20, the second electrode tab 32 may have the opposite polarity to the metal layer B of the battery case 20. Therefore, when the second electrode tab 32 comes in contact with the metal layer B exposed at an end of the battery case 20, particularly the sealing portion 24, an electrical short circuit may occur. Further, the sealing portion 24 may increase the volume of the pouch-type secondary battery 100, and may cause a problem in the external appearance of the pouch-type secondary battery 100. In order to such a problem, the pouch-type secondary battery 100 according to this example may have the insulating member 110 provided to the sealing portion 24.

Typically, a pouch-type secondary battery is provided with a sealing portion, and the sealing portion may cause a problem of safety, such as a short circuit. In order to solve such a problem, the sealing portion is insulated. In this case, the sealing portion is insulated using a plurality of members, and a separate adhesive is used so that the sealing portion is fixed to a battery case. As such, the sealing portion is insulated through a multi-step process. This results in a complicated manufacturing process of the pouch-type secondary battery and a failure of the external appearance of the pouch-type secondary battery, and therefore, the productivity of the pouch-type secondary battery is deteriorated.

This example provides the insulating member 110 which can allow the external appearance of the pouch-type secondary battery 100 to be improved and improve the productivity efficiency of the pouch-type secondary battery 100 by simplifying the manufacturing process of the pouch-type secondary battery 100. The insulating member 110 is integrally provided with the bonding portion 120, and thus, the process of insulating the sealing portion 24 and the process of fixing the sealing portion 24 to the battery case 20 are not performed as individual processes but can be collectively performed by one process. In the pouch-type secondary battery 100, the insulating member no may guide the sealing portion 24 to be fixed at an exact position of the battery case 20, and thus it is possible to improve the productivity and to minimize a failure rate.

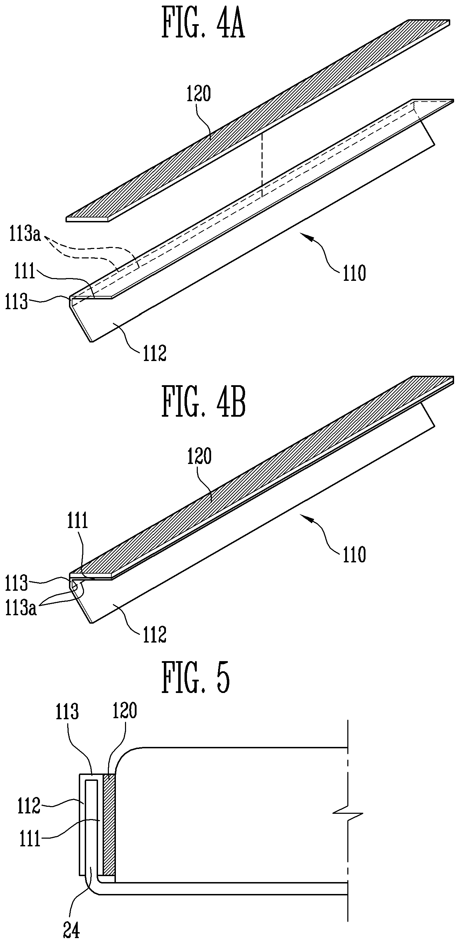

FIG. 4A is an exploded perspective view of an insulating member according to an example not forming part of the present invention. FIG. 4B is a perspective view of the insulating member according to the example not forming part of the present invention. FIG. 5 is an extended view of part X of FIG. 1.

Referring to FIGS. 4A to 5, the insulating member 110 may be provided to surround one and the other surfaces of the sealing portion 24. The insulating member 110 includes a buffer portion, also referred to as a joining portion, 113 provided to an inside thereof, and the buffer portion 113 may be provided to correspond to an end of the sealing portion 24. For example, the width of the buffer portion 113 may be provided to correspond to the thickness of the sealing portion 24. The insulating member 110 may be divided into first and second portions 111 and 112 with the buffer portion 113 at the centre joining the first and second portions, which are also referred to herein as first and second wings. In this case, the first and second portions 111 and 112 may be provided to have the same size. Folding lines 113a may be provided between the buffer portion 113 and the first and second portions 111 and 112, respectively, and the first and second portions 111 and 112 may be bent in the same direction based on the folding lines 113a. The first and second portions 111 and 112 of the insulating member 110 are provided to surround the sealing portion 24, and may be provided to have a size corresponding to that of the sealing portion 24.

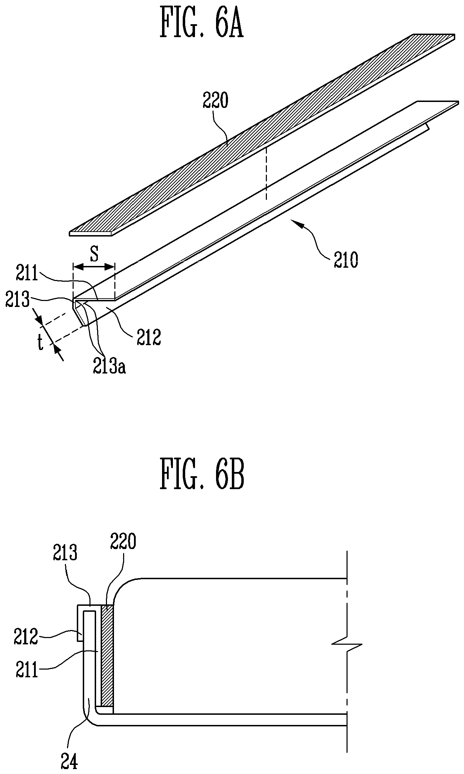

The sealing portion 24 may be bent to the main body 22 so as to decrease the volume of the pouch-type secondary battery 100. That is, the sealing portion 24 having the insulating member 110 may be bent to come in contact with the outside of the accommodating portion 21 of the battery case 20. The insulating member 110 is integrally provided with the bonding portion 120, and the bonding portion 120 enables the sealing portion 24 to be firmly fixed to the battery case 20.
Hereinafter, other examples not forming part of the present invention and embodiments of the present invention will be described with reference to FIGS. 6A to 7B. In these examples and embodiments, components, except the following description, are similar to those in the examples described in FIGS. 1 to 5, and therefore, their detailed descriptions will be omitted.

FIG. 6A is an exploded perspective view of an insulating member according to an example not forming part of the present invention. FIG. 6B is a plan view of a pouch-type secondary battery according to the example not forming part of the present invention.

Referring to FIGS. 6A and 6B, in the pouch-type secondary battery according to this example, a sealing portion 24 of the battery case 20 may be provided so that at least one part of the sealing portion 24 is surrounded by an insulating member 210. The insulating member 210 further includes a bonding portion 220 integrally provided therewith. The insulating member 210 may be provided to surround one and the other surfaces of the sealing portion 24, and the sealing portion 24 may be bent to be fixed to the battery case 20. The bonding portion 220 is interposed between the insulating member 210 and the battery case 20 so that the sealing portion 24 can be firmly fixed to the battery case 20.

The insulating member 210 may include a buffer (joining) portion 213 provided to the inside thereof and first and second portions (wings) 211 and 212 respectively extending to both sides from the buffer portion 213. The first and second portions 211 and 212 may be bent in the same direction from a folding line 213a of the buffer portion 213. The first portion 211 of the insulating member 210 has the bonding portion 220 provided thereto, and the bonding portion 220 is provided between the sealing portion 24 and the battery case 20. The second portion 212 of the insulating member 210 may be provided to cover the outer surface of the sealing portion 24.

For example, the width of the first portion 211 of the insulating member 210 having the bonding portion 220 provided in the insulating member 210 may be greater than that of the second portion 212 of the insulating member 210. That is, the first portion 211 of the insulating member 210 may be provided to have a size corresponding to that of the sealing portion 24, and the bonding portion 220 may be provided to have a size corresponding to that of the first portion 211 of the insulating member 210. In this case, the first portion 211 and the bonding portion 220 of the insulating member 210 are provided to have the size corresponding to that of the sealing portion 24, so as to maintain the fixing force between the sealing portion 24 and the battery case 20. On the other hand, the second portion 212 of the insulating member 210 is provided to have a size smaller than that of the sealing portion 24, so that it is possible to reduce material cost of the pouch-type secondary battery.

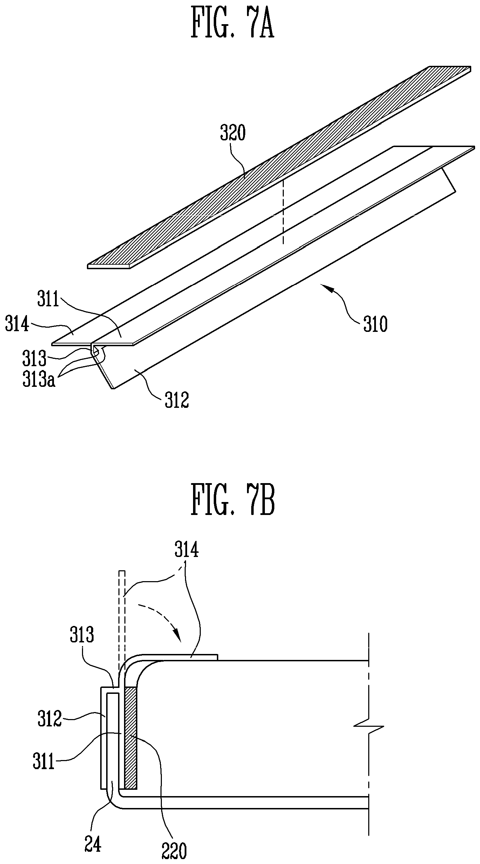

FIG. 7A is an exploded perspective view of an insulating member according to an embodiment of the present invention. FIG. 7B is a plan view of a pouch-type secondary battery according to the embodiment of the present invention.

Referring to FIGS. 7A and 7B, the pouch-type secondary battery may include an insulating member 310 and a sealing portion 24. The insulating member 310 may be provided to surround one and the other surfaces of the sealing portion 24, and the sealing portion 24 may be bent toward the battery case 20 so as to be fixed to the battery case 20. The insulating member 310 may further include a bonding portion 320 interposed between the sealing portion 24 and the battery case 20.

The insulating member 310 may include a buffer (joining) portion 313 provided to the inside thereof and first and second portions (wings) 311 and 312 respectively extended to both sides from the buffer portion 313. Folding lines 313a may be provided between the buffer portion 313 and the first and second portions 311 and 312, respectively. The insulating member 310 may further include a third portion or wing 314 extending from the buffer portion 313.

The first and second portions 311 and 312 of the insulating member 310 may be provided to cover the sealing portion 24, and the third portion 314 may be extended in the opposite direction to the sealing portion 24. The buffer portion 313 may be provided to correspond to an end portion of the sealing portion 24. That is, the first and second portions 311 and 312 of the insulating member 310 fist cover the sealing portion 24, and the sealing portion 24 can be firmly fixed to the battery case 20 by the bonding portion 320 provided on the first portion 311 of the insulating member 310. Subsequently, the third portion 314 of the insulating member 310 is provided to surround the battery case 20 once more, so that the sealing portion 24 can be more firmly fixed to the battery case 20.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A pouch-type secondary battery comprising:
an electrode assembly (30);
a pouch (20) having an accommodating portion (21) for accommodating the electrode assembly and a sealing portion (24) provided along an edge of the accommodating portion; and
an insulating member (310) around the sealing portion, the insulating member comprising:
a first wing (311) extending along a first surface of the sealing portion closest to the accommodating portion;
a second wing (312) extending along a second surface of the sealing portion opposite the first surface; and
a third wing (314) that is arranged to fold onto a top surface of the accommodating portion (21),
wherein the sealing portion (24) is folded against the accommodating portion (21) and a bonding member (320) is arranged between the accommodating portion (21) and the sealing portion (24) to fix the sealing portion to the accommodating portion, wherein the insulating member (310) and the bonding member (320) are integrally provided, and wherein the insulating member (310) is folded around an edge of the sealing portion.

2. The pouch-type secondary battery of claim 1, wherein the insulating member includes folding lines (313a) to allow folding of the insulating member.

3. The pouch-type secondary battery of claim 1, further comprising a joining portion (313) that joins the first and second wings and extends along the edge of the sealing portion.

4. The pouch-type secondary battery of any one of the preceding claims, wherein the first and second wings (311, 312) of the insulating member are symmetrically disposed around the edge of the sealing portion.

5. The pouch-type secondary battery of claim 4, wherein the insulating member covers substantially the whole of the first and second surfaces of the sealing portion.

6. The pouch-type secondary battery of claim 3, wherein the first wing (311) of the insulating member is wider than the second wing (312).

7. The pouch-type secondary battery of claim 6, wherein the first wing (311) covers substantially the whole of the first surface of the sealing portion.

8. The pouch-type secondary battery of claim 3, wherein the third wing (314) extends from the joining portion in an opposite direction to the first and second wings (311, 312).

9. The pouch-type secondary battery of any one of the preceding claims, wherein the pouch comprises a main body and a cover for covering the accommodating portion, the main body comprising a flange at the top of the accommodating portion, wherein an edge of the cover is bonded to the flange to form the sealing portion.

10. The pouch-type secondary battery of any one of the preceding claims, wherein the bonding member (320) is arranged between the first wing and the accommodating portion.

11. The pouch-type secondary battery of any one of the preceding claims, wherein the bonding member corresponds to a side of the first wing.

## Patentansprüche

1. Beutelartige Sekundärbatterie, umfassend:
eine Elektrodenanordnung (30);
einen Beutel (20) mit einem Aufnahmeabschnitt (21) zum Aufnehmen der Elektrodenanordnung und einem entlang einer Kante des Aufnahmeabschnitts bereitgestellten Abdichtungsabschnitt (24) und
ein Isolationsglied (310) um den Abdichtungsabschnitt, wobei das Isolationsglied Folgendes umfasst:
einen ersten Flügel (311), der sich entlang einer ersten Fläche des Abdichtungsabschnitts so nah wie möglich am Aufnahmeabschnitt erstreckt;
einen zweiten Flügel (312), der sich entlang einer zweiten Fläche des Abdichtungsabschnitts gegenüber der ersten Fläche erstreckt; und
einen dritten Flügel (314), der dazu angeordnet ist, auf eine obere Fläche des Aufnahmeabschnitts (21) gefaltet zu sein,
wobei der Abdichtungsabschnitt (24) gegen den Aufnahmeabschnitt (21) gefaltet ist und zwischen dem Aufnahmeabschnitt (21) und dem Abdichtungsabschnitt (24) ein Haftglied (320) angeordnet ist, um den Abdichtungsabschnitt am Aufnahmeabschnitt zu befestigen, wobei das Isolationsglied (310) und das Haftglied (320) einstückig bereitgestellt sind und wobei das Isolationsglied (310) um eine Kante des Abdichtungsabschnitts gefaltet ist.

2. Beutelartige Sekundärbatterie nach Anspruch 1, wobei das Isolationsglied Faltlinien (313a) einschließt, um das Falten des Isolationsglieds zu ermöglichen.

3. Beutelartige Sekundärbatterie nach Anspruch 1, ferner umfassend einen Verbindungsabschnitt (313), der den ersten und den zweiten Flügel verbindet und sich entlang der Kante des Abdichtungsabschnitts erstreckt.

4. Beutelartige Sekundärbatterie nach einem der vorangehenden Ansprüche, wobei der erste und der zweite Flügel (311, 312) des Isolationsglieds symmetrisch um die Kante des Abdichtungsabschnitts angeordnet sind.

5. Beutelartige Sekundärbatterie nach Anspruch 4, wobei das Isolationsglied im Wesentlichen die gesamte erste und zweite Fläche des Abdichtungsabschnitts bedeckt.

6. Beutelartige Sekundärbatterie nach Anspruch 3, wobei der erste Flügel (311) des Isolationsglieds breiter als der zweite Flügel (312) ist.

7. Beutelartige Sekundärbatterie nach Anspruch 6, wobei der erste Flügel (311) im Wesentlichen die gesamte erste Fläche des Abdichtungsabschnitts bedeckt.

8. Beutelartige Sekundärbatterie nach Anspruch 3, wobei sich der dritte Flügel (314) vom Verbindungsabschnitt in eine dem ersten und dem zweiten Flügel (311, 312) entgegengesetzte Richtung erstreckt.

9. Beutelartige Sekundärbatterie nach einem der vorangehenden Ansprüche, wobei der Beutel einen Hauptkörper und eine Abdeckung zum Abdecken des Aufnahmeabschnitts umfasst, wobei der Hauptkörper einen Flansch an der Oberseite des Aufnahmeabschnitts umfasst, wobei eine Kante der Abdeckung am Flansch angehaftet ist, um den Abdichtungsabschnitt auszubilden.

10. Beutelartige Sekundärbatterie nach einem der vorangehenden Ansprüche, wobei das Verbindungsglied (320) zwischen dem ersten Flügel und dem Aufnahmeabschnitt angeordnet ist.

11. Beutelartige Sekundärbatterie nach einem der vorangehenden Ansprüche, wobei das Verbindungsglied einer Seite des ersten Flügels entspricht.

## Revendications

1. Batterie secondaire de type poche comprenant :
un ensemble d'électrodes (30) ;
une poche (20) ayant une partie de logement (21) pour loger l'ensemble d'électrodes et une partie d'étanchéité (24) prévue le long d'un bord de la partie de logement ; et
un élément isolant (310) autour de la partie d'étanchéité, l'élément isolant comprenant :
une première aile (311) s'étendant le long d'une première surface de la partie d'étanchéité la plus à proximité de la partie de logement ;
une deuxième aile (312) s'étendant le long d'une seconde surface de la partie d'étanchéité opposée à la première surface ; et
une troisième aile (314) qui est agencée pour se plier sur une surface supérieure de la partie de logement (21),
dans laquelle la partie d'étanchéité (24) est pliée contre la partie de logement (21) et un élément de liaison (320) est agencé entre la partie de logement (21) et la partie d'étanchéité (24) pour fixer la partie d'étanchéité à la partie de logement, dans laquelle l'élément isolant (310) et l'élément de liaison (320) sont prévus de manière solidaire, et dans laquelle l'élément isolant (310) est plié autour d'un bord de la partie d'étanchéité.

2. Batterie secondaire de type poche selon la revendication 1, dans laquelle l'élément isolant comprend des lignes de pliage (313a) pour permettre le pliage de l'élément isolant.

3. Batterie secondaire de type poche selon la revendication 1, comprenant en outre une partie d'assemblage (313) qui assemble les première et deuxième ailes et s'étend le long du bord de la partie d'étanchéité.

4. Batterie secondaire de type poche selon l'une quelconque des revendications précédentes, dans laquelle les première et deuxième ailes (311, 312) de l'élément isolant sont symétriquement disposées autour du bord de la partie d'étanchéité.

5. Batterie secondaire de type poche selon la revendication 4, dans laquelle l'élément isolant recouvre sensiblement la totalité des première et deuxième surfaces de la partie d'étanchéité.

6. Batterie secondaire de type poche selon la revendication 3, dans laquelle la première aile (311) de l'élément isolant est plus large que la deuxième aile (312).

7. Batterie secondaire de type poche selon la revendication 6, dans laquelle la première aile (311) recouvre sensiblement la totalité de la première surface de la partie d'étanchéité.

8. Batterie secondaire de type poche selon la revendication 3, dans laquelle la troisième aile (314) s'étend à partir de la partie d'assemblage dans une direction opposée aux première et deuxième ailes (311, 312).

9. Batterie secondaire de type poche selon l'une quelconque des revendications précédentes, dans laquelle la poche comprend un corps principal et un couvercle pour recouvrir la partie de logement, le corps principal comprenant une bride au niveau de la partie supérieure de la partie de logement, dans laquelle un bord du couvercle est relié à la bride afin de former la partie d'étanchéité.

10. Batterie secondaire de type poche selon l'une quelconque des revendications précédentes, dans laquelle l'élément de liaison (320) est agencé entre la première aile et la partie de logement.

11. Batterie secondaire de type poche selon l'une quelconque des revendications précédentes, dans laquelle l'élément de liaison correspond à un côté de la première aile.
